# DEMANDE DE BREVET EUROPEEN

(11) **EP 1 229 689 A1**
(43) Date de publication de la demande: **07.08.2002**
(21) Numéro de dépôt: 01402907.8
(22) Date de dépôt: 13.11.2001
(51) Int. Cl.: H04L 12/28, H04Q 7/22

(54) **Procédé d'échange de données entre un réseau informatique et des terminaux d'un réseau de radiotéléphonie et réseau informatique pour la mise en oeuvre du procédé**

(30) Priorité: 12.01.2001 FR 0100385
(71) Demandeur: Sagem S.A., 75015 Paris (FR)
(72) Inventeur: Vermande, Michel, 95770 Montreuil Sur Epte (FR)
(74) Mandataire: Bloch, Gérard

(57) **Abrégé**

Dans le procédé de l'invention, ayant relié le réseau informatique (10) au réseau radio (20) par une passerelle (12) associée à un terminal (11) du réseau radio (20), on mémorise temporairement dans la passerelle (12) les données à échanger, reçues en provenance d'un des réseaux (10 ; 20), émetteur, puis on retransmet les données mémorisées à l'autre réseau (20 ; 10), destinataire.

Le réseau informatique (10) comporte un terminal (11) et une passerelle (12) comprenant i) des moyens tampon (13) de stockage temporaire de données, ii) des moyens (15) d'échange interne de données et iii) des moyens (14) d'adaptation de format de données.

## Description

La présente invention concerne les réseaux informatiques reliés à un réseau de radiotéléphonie.

Pour qu'un terminal téléphonique d'un réseau de radiotéléphonie, comme par exemple un réseau cellulaire notamment le réseau GSM, puisse accéder à un réseau informatique, on relie ce dernier au réseau GSM à travers l'Internet. Si, techniquement, une telle solution est satisfaisante, elle n'est cependant pas toujours économiquement adaptée aux applications d'échange de données. Par exemple, des appels cycliques, par un terminal GSM, d'une messagerie du réseau informatique, pour prendre connaissance de nouveaux messages reçus, correspondent chacun à une communication inter-réseaux, de coût élevé et souvent inutile, en l'absence de nouveaux messages.

La présente invention vise à proposer une solution plus économique pour les transmissions de données entre un réseau informatique local et des terminaux de radiotéléphonie.

On connaît déjà, par DE 197 57 770, un procédé d'échange de données entre un réseau informatique et des terminaux d'un réseau de radiotéléphonie cellulaire, caractérisé par le fait que, ayant relié le réseau informatique au réseau radio par une passerelle associée à un terminal du réseau radio :
- dans un premier temps, on mémorise temporairement dans la passerelle les données à échanger, reçues en provenance d'un des réseaux, émetteur, et
- dans un deuxième temps, on retransmet les données mémorisées à l'autre réseau, destinataire.

L'invention de la présente demande vise à perfectionner ce procédé de l'art antérieur. A cet effet, l'invention concerne un procédé de type précisé ci-dessus, caractérisé par le fait que :
- on mémorise, dans le premier temps, une requête externe de fourniture des données à échanger, cette requête étant reçue à travers une liaison du réseau radio (20),
- on coupe ensuite la liaison radio,
- dans le deuxième temps, on transmet la requête dans le réseau informatique (10) pour se procurer les données et
- on rétablit la liaison radio pour fournir en retour les données.

Ainsi, comme la passerelle fonctionne en tampon, elle peut recevoir et mémoriser une requête externe de fourniture des données à échanger et la liaison externe correspondante peut alors être coupée. Les données sont alors acquises par la passerelle et mémorisées, traitées hors communication externe, et peuvent ensuite être transmises, au format voulu, au terminal radio requérant, par rétablissement de la liaison externe. Comme en outre la requête ou la réponse peut être très succincte, elle peut alors être transmise dans un canal de données ou de signalisation, à coût limité. On notera que la communication radio peut n'être que monodirectionnelle, pour transférer des données externes dans le réseau local ou pour lire, depuis l'extérieur, de nouvelles données, préalablement et automatiquement chargées dans la passerelle depuis un appareil du réseau informatique et donc ainsi directement accessibles depuis l'extérieur.

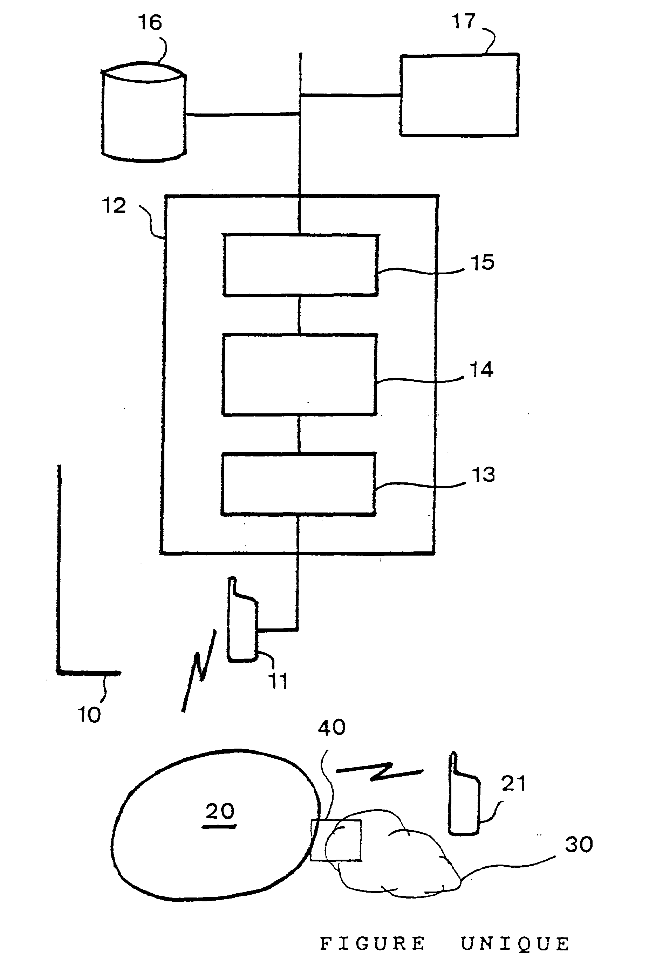

L'invention sera mieux comprise à l'aide de la description suivante d'un mode préféré de mise en oeuvre du procédé de l'invention et d'une forme préférée de réalisation d'un réseau informatique selon l'invention, en référence à la figure unique qui le représente schématiquement, relié à des réseaux externes.

Le réseau informatique, référencé 10, comporte ici un serveur de messagerie 16 relié à divers terminaux informatiques 17, tels que des PC. Le réseau informatique 10 comporte une passerelle 12 reliée à un terminal radio 11 compatible, et en liaison, avec un réseau téléphonique cellulaire 20, ici le réseau GSM, associé à des terminaux cellulaires 21. Le réseau GSM 20 est relié à l'Internet 30 par la fonction IWF 40 (Inter Working Function), qui assure la conversion entre les formats de transmission GSM et les formats de transmission téléphonique pour la transmission de données. Le terminal 11 est en fait ici un terminal identique aux terminaux classiques 21 et il appartient donc fonctionnellement aux réseaux 10 et 20. Toutefois, comme le terminal 11 constitue un élément essentiel du réseau informatique 10, on considérera arbitrairement, par la suite, qu'il appartient au réseau informatique 10, uniquement. De ce fait, le terminal 11 étant considéré comme étant hors du réseau cellulaire 20, il est qualifié de compatible avec ce dernier, pour indiquer qu'il dispose lui aussi des fonctions des autres terminaux 21.

Le terminal dédié 11 peut d'ailleurs comporter des fonctions supplémentaires par rapport à ceux-ci, pour ses liaisons, filaires ou non, avec la passerelle 12, et il peut aussi se présenter sous une forme autre, puisqu'il peut être fixe. On peut en outre considérer que le terminal 11 fait partie, au moins fonctionnellement, de la passerelle 12.

La passerelle 12 comporte un bloc logique 13 d'interface ou échange externe de données, à mémoire tampon de stockage temporaire de données, la reliant au terminal 11. La passerelle 12 comporte en outre un bloc logique 15 d'interface ou échange interne de données, à mémoire tampon de stockage temporaire, la reliant au reste du réseau informatique 10. Un bloc 14, d'adaptation de format de données, relie entre eux les blocs 13 et 15 de façon bidirectionnelle.

Les blocs d'interface 13 et 15 assurent en particulier l'adaptation physique des signaux de données échangés, à travers le terminal 11, entre les équipements 16, 17 du réseau informatique 10 et les terminaux du réseau 20. Il s'agit du niveau 1 de l'architecture des Systèmes Ouverts (OSI). Le bloc 14 traite le niveau 2 OSI de traitement logique, c'est-à-dire en particulier l'adaptation du format par rangement des bits de données selon un format déterminé, par exemple des trames de taille déterminée, et l'adaptation de débit. Comme évoqué plus haut, le bloc 14 est bidirectionnel et comporte donc au moins deux fonctions d'adaptation logique, inverses. l'une de l'autre, pour adapter les données externes entrantes, provenant du terminal 11, au format prévu par un protocole de transmission spécifique au réseau informatique 10 et pour, en sens opposé, adapter les données sortantes du réseau informatique 10 au réseau cellulaire 20.

Le fonctionnement du réseau informatique local 10 va maintenant être expliqué, et en particulier ses échanges de données avec les terminaux 21 du réseau GSM 20.

D'une façon générale, le réseau informatique 10 étant ainsi relié au réseau radio 20 par la passerelle 12 associée au terminal 11,
- dans un premier temps, on mémorise temporairement, dans la passerelle 12, des données à échanger, reçues en provenance de l'un des réseaux 10, 20, émetteur, et
- dans un deuxième temps, on retransmet les données mémorisées à l'autre réseau 20, 10, destinataire.

Par exemple, le terminal 21 appelle le terminal 11 et lui transmet, par une liaison radio, une requête (externe) de fourniture de données stockées dans le réseau informatique local 10, par exemple dans le serveur de messagerie 16. Le terminal 11 transmet au bloc d'interface externe 13, la requête de fourniture des données stockées à échanger. Le bloc d'interface externe 13 mémorise, dans un premier temps, la requête et la liaison radio est coupée. Dans un deuxième temps, la passerelle 12 transmet la requête dans le réseau informatique local 10 pour se procurer les données requises auprès du serveur de messagerie 16. Ce dernier transmet en retour les données requises au bloc d'interface interne 15. On rétablit ensuite la liaison radio du terminal 11 avec le terminal GSM 21 pour fournir en retour les données. Le bloc de traitement 14 assure ses fonctions d'adaptation dans les étapes ci-dessus pour les échanges entre les blocs d'interface 13 et 15.

Une requête de données peut émaner indifféremment du réseau 10 ou du réseau 20.

Le rétablissement de la liaison radio peut au choix être effectué par la passerelle 12, après réponse du serveur de messagerie 16, ou par le terminal GSM 21, après un délai déterminé suivant son premier appel, de requête. Dans ce dernier cas, les données mémorisées dans la passerelle 12 sont donc retransmises au réseau destinataire 20 sur sa demande. La requête et les données requises peuvent être transmises à travers une voie téléphonique ou en utilisant le service des messages courts SMS, lorsque le volume des données correspondantes est limité.

Les étapes exposées ci-dessus pour transférer des données du réseau informatique 10 au réseau téléphonique 20 s'appliquent, selon le même principe, pour les transferts entrants du réseau informatique 10.

Certaines données stockées dans le réseau informatique 10 présentent une forte probabilité pour qu'un terminal extérieur (21) présente une requête d'échange de données, pour les acquérir. C'est le cas pour les messages du serveur 16. De ce fait, afin d'éviter des retards dans la lecture des messages suite à des requêtes, le serveur de messagerie 16 transmet, au bloc 15 de la passerelle 12 qui les mémorise, les nouvelles données ou messages qu'il a reçus et ceci dès qu'elles doivent être échangées, c'est-à-dire sans délai, afin de pouvoir informer immédiatement l'utilisateur du terminal 21.

En variante, le serveur de messagerie 16 n'émet que des notifications d'arrivée de nouveaux messages.

Lorsque le terminal 21 émet une requête correspondante, la passerelle 12 peut ainsi immédiatement retransmettre les données mémorisées, à travers le terminal 11.

De préférence, la liaison radio de la requête n'est alors pas coupée et elle sert à transmettre en retour les données. Il peut aussi être prévu que la passerelle 12 commande l'envoi immédiat, par le terminal 11, de la notification, par un message court SMS, afin que le terminal 21 soit informé de la disponibilité, dans le réseau informatique 10, de nouvelles données à échanger. On peut ainsi, en particulier, tenir à jour automatiquement un agenda du terminal 21 si ce dernier est programmé à cet effet.

## Revendications

1. Procédé d'échange de données entre un réseau informatique (10) et des terminaux d'un réseau de radiotéléphonie cellulaire (20), dans lequel, ayant relié le réseau informatique (10) au réseau radio (20) par une passerelle (12) associée à un terminal (11) du réseau radio (20):
- dans un premier temps, on mémorise temporairement dans la passerelle (12) les données à échanger, reçues en provenance d'un des réseaux (10 ; 20), émetteur, et
- dans un deuxième temps, on retransmet les données mémorisées à l'autre réseau (20 ; 10), destinataire, procédé **caractérisé par le fait que** :
- on mémorise, dans le premier temps, une requête externe de fourniture des données à échanger, cette requête étant reçue à travers une liaison du réseau radio (20),
- on coupe ensuite la liaison radio,
- dans le deuxième temps, on transmet la requête dans le réseau informatique (10) pour se procurer les données et
- on rétablit la liaison radio pour fournir en retour les données.

2. Procédé selon la revendications 1, dans lequel les données mémorisées sont retransmises au dit autre réseau destinataire (20; 10) sur sa demande.

3. Procédé selon l'une des revendications 1 et 2, dans lequel les données à échanger sont mémorisées dans la passerelle (12) dès qu'elles doivent être échangées.

4. Procédé selon la revendication 3, dans lequel la passerelle (12) commande l'émission, par le terminal associé (11), d'un message court (SMS) de notification de la disponibilité de données à échanger.
